# EUROPEAN PATENT APPLICATION

(11) **EP 1 511 337 A1**
(43) Date of publication of application: **02.03.2005**
(21) Application number: 04254429.6
(22) Date of filing: 23.07.2004
(51) Int. Cl.: H04Q 7/32, H04Q 7/38

(54) **A network for mobile communications, and a method of intermittent activation of receiving circuitry of a mobile user terminal**

(30) Priority: 07.08.2003 US 637995
(71) Applicant: LUCENT TECHNOLOGIES INC., Murray Hill, New Jersey 07974-0636 (US)
(72) Inventor: Iqbal, Jami, Swindon, Wiltshire SN1 2SF (GB); Mazlyn, Mona Mustapha, Swindon, Wiltshire SN25 1WB (GB)
(74) Representative: Sarup, David Alexander

(57) **Abstract**

A method is provided of intermittent activation of receiving circuitry of a mobile user terminal so as to listen to a paging channel. The activation is periodic. The period is selected dependent upon either the time of day or which of a plurality of types of service is provided in the last call connection to the mobile user terminal.

## Description

### Field of the Invention

The present invention relates to a method of intermittent activation of receiving circuitry of a mobile user terminal so as to listen to a paging channel. The present invention also relates to a network for mobile communications.

### Description of the Related Art

In known networks for mobile telecommunications, the time intervals between a mobile user terminal "waking up" so as to start to listen to a paging channel are of constant length.

### Summary of the Invention

A method and a network according to the present invention are defined in the independent claims to which the reader should now refer. Preferred features are laid out in the dependent claims.

An example of the present invention is a method of intermittent activation of receiving circuitry of a mobile user terminal so as to listen to a paging channel. The activation is periodic. The period is selected dependent upon either the time of day or which of a plurality of types of service is provided in the last call connection to the mobile user terminal. Another example is a corresponding network for mobile telecommunications.

Some embodiments of the present invention have the period, also known as discontinuous reception cycle length, adjusted dependent upon the type of service required. The period is shorter where, for example, the call connection is in respect of a service requiring a fast response, such as an 'interactive' service, as compared to where the call connection is in respect of a service needing only a slow response, such as a 'background' service. This has the advantage that a mobile user terminal that requires a 'background' service, avoids wasting precious battery power by listening to the paging channel more often than it needs to.

Some embodiments have another period, in particular a Core Network (CN) discontinuous reception cycle length, which is set dependent upon on the time of day. The time of day is a guide to expected traffic activity. For example, users are more likely to receive calls during the daytime rather than in the early hours of the morning, so the period is selected to be shorter in the daytime. This leads to more efficient use of the energy in the mobile user terminal's battery since the mobile user terminal will not wake up so often to listen to the paging channel when the likelihood of an incoming call is low.

In some embodiments, a first period is selected dependent upon which one of a plurality of types of service is provided in the last call connection to the mobile user terminal for use when the mobile user terminal is in one mode, and a second period is selected dependent upon the time of day for use when the mobile user terminal is in another mode. Preferably then the first mode is URA_PCH mode, and the second mode is idle mode, the network being a Universal Mobile Telecommunications System (UMTS) network.

### Brief Description of the Drawings

A preferred embodiment of the present invention will now be described by way of example and with reference to the drawings, in which:
Figure 1 is a diagram illustrating a UMTS network,
Figure 2 is a diagram illustrating a mobile user terminal,
Figure 3 is a diagram illustrating mobile user terminal On/Off periods for reception of messages on a paging channel,
Figure 4 is a diagram illustrating the effect of discontinuous reception cycle length on the timing of sending a paging message to a mobile user terminal,
Figure 5 is a diagram illustrating as functional blocks part of the operation of radio network controller (RNC) shown in Figure 1,
Figure 6 is a flow chart illustrating selection of a UTRAN discontinuous reception cycle length dependent upon call service type, and
Figure 7 is a diagram illustrating as functional blocks part of the core network shown in Figure 1.

### Detailed Description

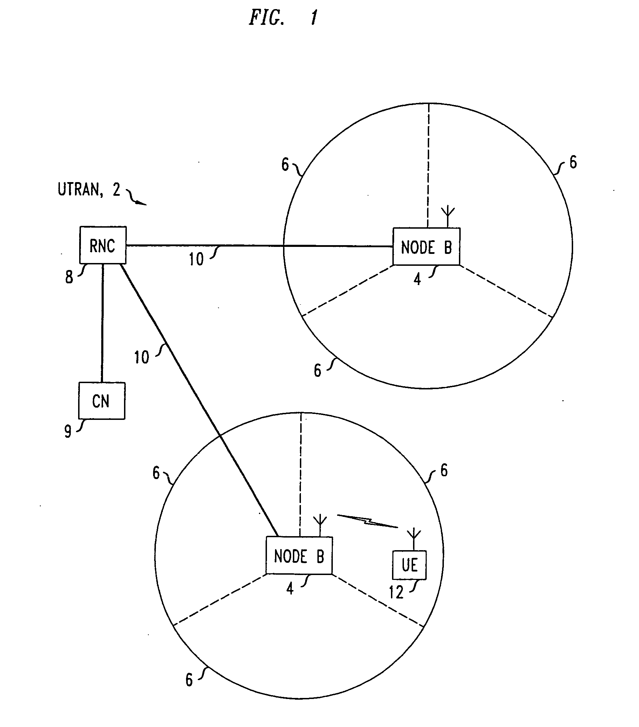

The preferred network is a Universal Mobile Telecommunications System (UMTS) terrestrial access network (UTRAN) , which is a type of wideband code division multiple access (CDMA) network for mobile telecommunications. The UTRAN network is basically as shown in Figure 1. Only one radio network controller and two base stations of the UTRAN network 2 are shown for simplicity. As shown in this Figure, the UTRAN network 2 includes base stations 4. Each base station (Node B in UMTS terminology) 4 typically has three cells 6 (i.e. radio coverage areas, also known as sectors) as the base station 4 typically has three directional antennas (not shown) angled at 120 degrees to each other in azimuth. Radio network controllers (RNC) 8 which are themselves connected to the rest of the telecommunications "world" (denoted Core Network CN 9) each control several base stations 4 and hence a number of cells 6. A base station 4 is connected to its controlling radio network controller (RNC) 8 via a respective interface 10 known as an luB interface. In use, a mobile user terminal 12 (often referred to as User Equipment (UE) in UMTS terminology) communicates with a serving radio network controller (RNC) 8 via at least one cell 6 of at least one base station 4 (i.e. communicates with the UTRAN network 2).

### Discontinuous Reception (discontinuous reception) to save battery power

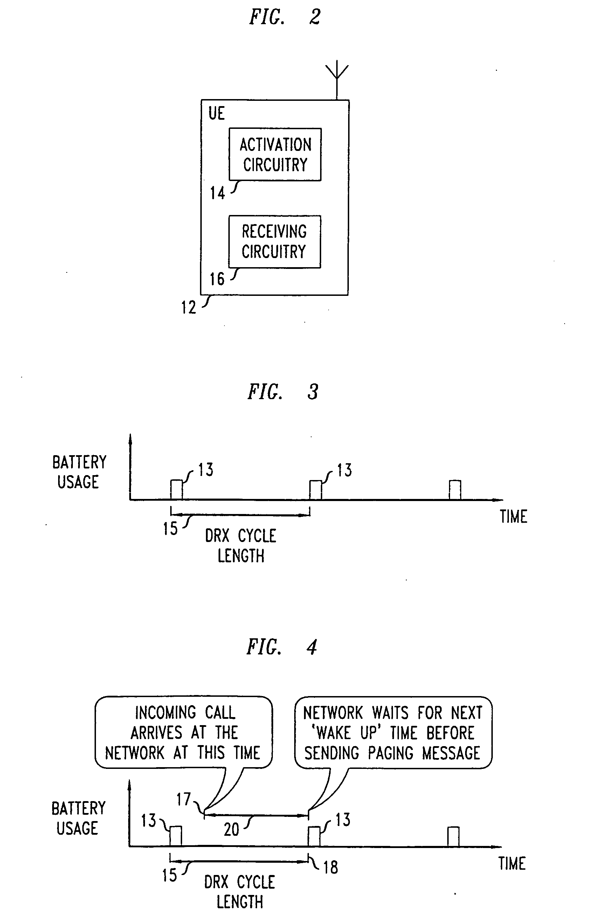

When a mobile user terminal is not actively sending or receiving data (i.e. not in a call connection), it must listen for any call connection requests coming in on a paging channel. As shown in Figures 2 and 3, in order to save the energy stored in the battery of the mobile user terminal, the mobile user terminal listens to the paging channel, by activation circuitry 14 activating its receiving circuitry 16, only at predetermined intervals 13. This is known as discontinuous reception (sometimes denoted DRX). The mobile user terminal does not listen continuously to the paging channel when not involved in a call, thereby conserving battery power. The interval 15 between the starts of consecutive intervals of listening to the paging channel is called the discontinuous reception cycle length.

As shown in Figure 4, if there is a call for a particular mobile user terminal arriving at the radio network controller (RNC) 8 at a particular time 17 then the RNC, the radio network controller (RNC) 8 ensures that the paging message for the particular mobile user terminal is transmitted at the time 18 when the mobile user terminal is listening to the paging channel, i.e. during one of the awake periods 13. There is thus a delay 20.

It will be understood that the longer the discontinuous reception cycle length, the longer time it is likely to take to establish the call. However, in this case the battery life of the mobile user terminal before a recharge is required is extended. On the other hand, if a shorter discontinuous reception cycle length is used, the time taken to establish the call is reduced, but the battery life is shortened in consequence.

In the UMTS network 2, two discontinuous reception cycles are defined namely at UTRAN level and at core network level. These are considered in turn below.

### Setting UTRAN discontinuous reception cycle length

The UTRAN discontinuous reception cycle length is selected to be different for different mobile user terminals and its value is signalled to the mobile user terminal by the UMTS network 2 whenever a control-signalling connection to the mobile user terminal exists. This discontinuous reception cycle is applied when the mobile user terminal has a signalling connection to the UMTS network 2, but is not actively sending or receiving user data, in other words the mobile user terminal is in UTRAN Registration Area- Paging Channel mode (which is often denoted URA_PCH mode).

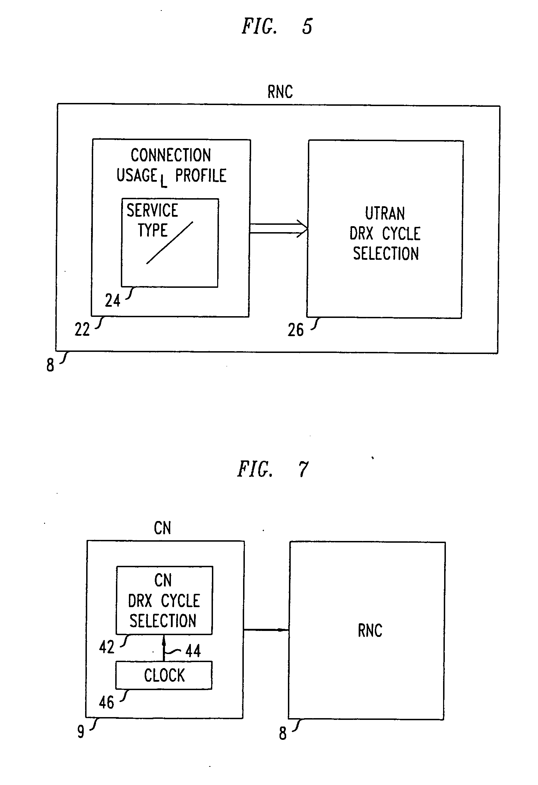

As shown in Figure 5, the UTRAN discontinuous reception cycle length for a particular mobile user terminal is set depending on the type of service of the last call to that the particular mobile user terminal. This is because of an expectation that the next call is most likely to be of the same type. For example, for services requiring a fast response time such as an 'interactive' type of service (e.g. on-line gaming or web browsing), the UTRAN discontinuous reception cycle length is set to a shorter value than if the type of service does not require a fast response time e.g. background services such as transferring files or downloading email.

As shown in Figure 5, the UTRAN discontinuous reception cycle is set by the radio network controller (RNC) 8. The RNC 8 receives a user connection profile 22 associated with a call to be set up which includes an indication 24 of the type of service the call connection to the mobile user terminal is used for. The indication 24 is used by the UTRAN discontinuous reception cycle selector 26 in selecting the UTRAN discontinuous reception cycle length to be transmitted to the mobile user terminal 12.

The information of UTRAN discontinuous reception cycle length is transmitted to the particular mobile user terminal as part of the dedicated control-signalling involved in setting up the call to that mobile user terminal. Once the call has finished, the mobile user terminal thereafter uses the selected UTRAN discontinuous reception cycle length it has been informed of, at least until a new call to the mobile user terminal in respect of a different type of service causes a fresh UTRAN discontinuous reception cycle length to be selected.

Setting the UTRAN discontinuous reception cycle length depending on service type saves energy in the mobile user terminal's battery whilst providing an appropriate response time for the most likely next expected service.

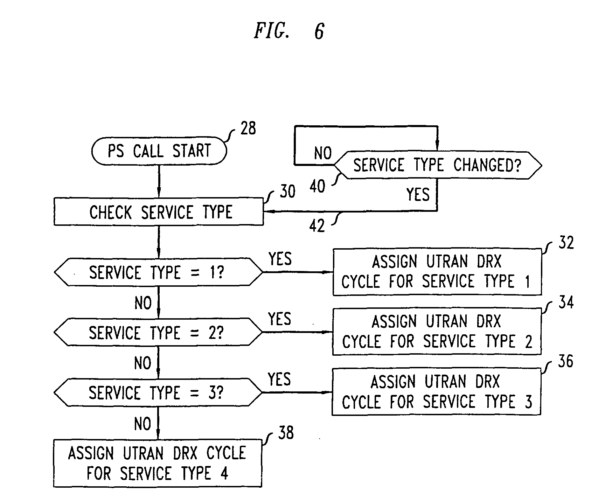

The UTRAN discontinuous reception cycle length is only set as part of a packet switched call. As shown in Figure 6, once the packet switched (PS) call is requested, the radio network controller (RNC) selects a discontinuous reception cycle length appropriate for the type of packet switched service requested. For example, as shown in Figure 5, after the start of a packet switched call 28, service type is determined 30. If of a first service, a first UTRAN discontinuous reception cycle length is assigned 32. Else if of a second service, a second UTRAN discontinuous reception cycle length is assigned 34. Else if of a third service, a third UTRAN discontinuous reception cycle length is assigned 36. Else a fourth UTRAN discontinuous reception cycle length is assigned 34. After assignment of the UTRAN discontinuous reception cycle length, a periodic check 40 is made that the service type is unchanged. If a change has occurred, the new service type is determined 30, causing a fresh selection of the UTRAN discontinuous reception cycle.

UTRAN DRX cycle length is selected dependent upon the type of service, for example as shown in Table 1.

**Table 1**

| Type of Packet Switched Service | UTRAN DRX cycle length |
|---|---|
| Packet Data call | 50 milliseconds |
| Video Clip | 100 milliseconds |
| Web-Browsing | 500 milliseconds |
| FTP Sessions | 2 seconds |
| Multi-Broadcast to a specific User Group | 5 seconds |

In some other embodiments, UTRAN discontinuous reception cycle length for a mobile user terminal is selected dependent not only on service type to that mobile user terminal but also other service parameters. One example is quality of service (QoS) class, where certain classes of mobiles get higher priority. Another example is proximity to a base station.

### Setting CN discontinuous reception cycle length

The core network (CN) domain discontinuous reception cycle length is generally longer than that of the UTRAN discontinuous reception cycle length. The CN discontinuous reception cycle length is used by the mobile user terminal when the mobile user terminal is in idle mode. That is when it does not have any call connections to the UMTS network 2 (and is, of course, a different mode to URA_PCH mode). All the mobile user terminals in the UMTS network 2 are informed about the discontinuous reception cycle length through the system information broadcast (SIB) which is a regular broadcast to all mobile user terminals.

As shown in Figure 7, the CN discontinuous reception cycle length is set depending on the time of day, for example, a shorter value (e.g. 10 seconds) is used during the daytime and a longer value (e.g. 1 minute) for the early hours of the morning (e.g.4am).

During the busiest call activity period (e.g. 4pm to 6pm), the CN discontinuous reception cycle length is set to a shorter value still (e.g. 100 milliseconds).

As shown in Figure 7, the CN discontinuous reception cycle is set by a CN discontinuous reception cycle length selection module 42 of the core network 9 which includes an input 44 from a clock 46 so as to inform of the time of day. The RNC 8 is informed of the CN discontinuous reception cycle length.

Setting the CN discontinuous reception cycle length depending on the time of day makes efficient use of the mobile user terminal battery life. This is because the mobile user terminal effectively wakes up less frequently when it is less likely to receive an incoming call.

## Claims

1. A method of intermittent activation of receiving circuitry of a mobile user terminal so as to listen to a paging channel, the activation being periodic with a period selected dependent upon either the time of day or which one of a plurality of types of service is provided in the last call connection to the mobile user terminal.

2. A method according to claim 1, in which the period is selected dependent upon which one of a plurality of types of service is provided in the last call connection to the mobile user terminal.

3. A method according to claim 2, in which the type of service is indicated in a user profile in respect of the call connection to be made with the mobile user terminal received by the base station from elsewhere in the network.

4. A method according to claim 2, comprising sending in a call connection information of the period to be used after the call connection.

5. A method according to claim 2, in which the period is for use when the mobile user terminal is in control signalling connection with a base station.

6. A method according to claim 5, in which the period is for use when the mobile user terminal is in UTRAN Registration Area Paging Channel (URA_PCH) mode, the network being a Universal Mobile Telecommunications System (UMTS) network.

7. A method according to claim 1, in which the period is selected dependent upon the time of day.

8. A method according to claim 7, in which information of the period to be used is sent in a System Information Broadcast (SIB).

9. A method according to claim 7, in which the period is to be used when the mobile user terminal is in idle mode, the network being a Universal Mobile Telecommunications System (UMTS) network.

10. A network for mobile telecommunications comprising a base station and a mobile user terminal, the mobile user terminal comprising receiving circuitry and activation circuitry for intermittent activation of the receiving circuitry so as to listen to a paging channel, the activation being periodic with a period selected dependent upon either the time of day or which one of a plurality of types of service was provided in the last call connection to the mobile user terminal.
